Europäisches Patentamt

European Patent Office

Office européen des brevets

(11) Publication number: **0 015 163**
**A1**

(12) **EUROPEAN PATENT APPLICATION**

(21) Application number: **80300582.6**

(22) Date of filing: **27.02.80**

(51) Int. Cl.³: **G 01 S 13/02**
**G 01 S 7/36**

(30) Priority: **27.02.79 GB 7906932**

(43) Date of publication of application:
**03.09.80 Bulletin 80/18**

(84) Designated Contracting States:
**BE DE FR IT NL**

(71) Applicant: **DECCA LIMITED**
**Decca House 9 Albert Embankment**
**London SE1 7SW(GB)**

(72) Inventor: **Milne, Kenneth**
**30a Southleigh Road**
**Havant Hampshire PO9 2RS(GB)**

(74) Representative: **Rennie, Ian Malcolm et al,**
**BOULT, WADE & TENNANT 27 Furnival Street**
**London EC4A 1PQ(GB)**

(54) **Radar apparatus having spaced transmitting and receiving antennae.**

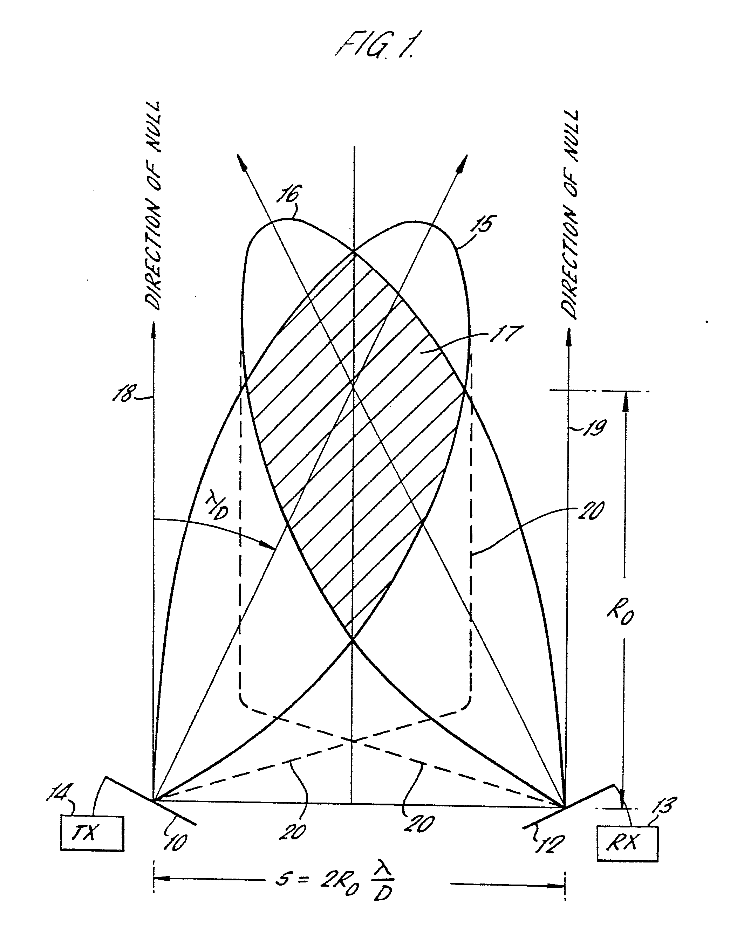

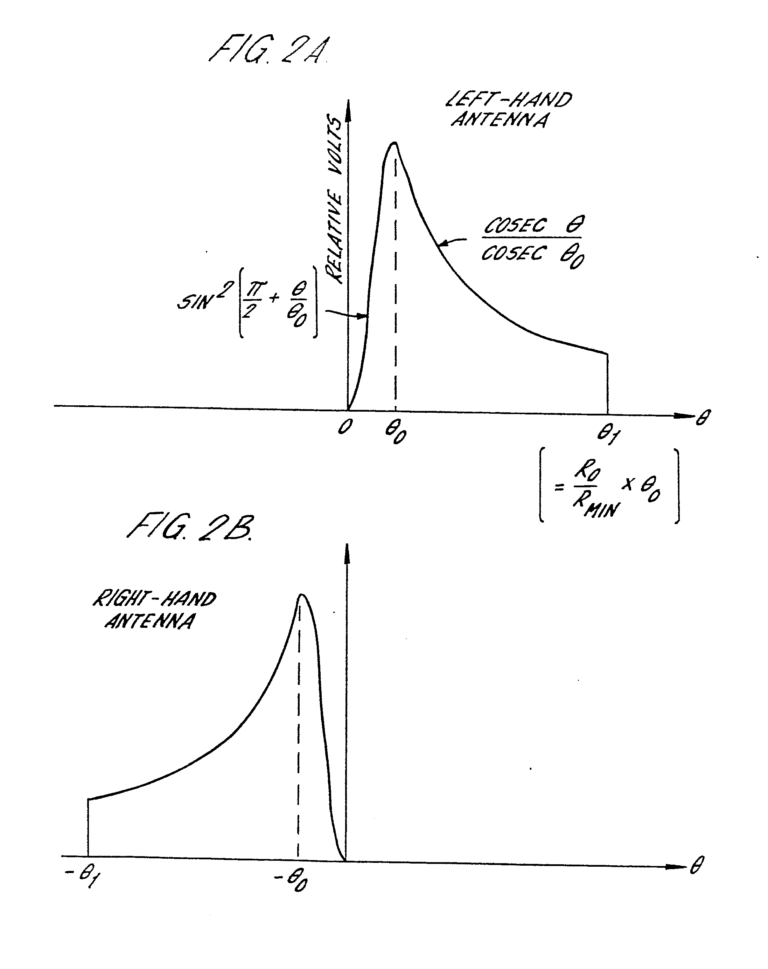

(57) In radar apparatus, to reduce long range clutter and chaff returns, a bistatic radar system is used with spaced directional transmitting and receiving antennae (10, 12 in Figure 1), the directional patterns overlapping but with the null 18 on one side of one directional pattern being substantially parallel to the null 19 on the other side of the other directional pattern whereby signals from targets, clutter, etc. beyond a predetermined range $R_0$ dependent on the directional patterns and antenna spacing are substantially reduced. The invention is particularly applicable to short range radars with a high repetition rate and especially to radars with moving target indication.

FIG 1.

"RADAR APPARATUS HAVING SPACED TRANSMITTING

AND RECEIVING ANTENNAE"

This invention relates to radar apparatus and is concerned more particularly with reducing the effects of long range clutter in a short range radar.

For a surveillance radar the operating frequency usually has to be chosen as a compromise. A low frequency is desirable to give good anti-clutter performance in an MTI (moving target indication) mode whereas a high frequency enables a narrow beam width to be obtained thereby improving the performance under conditions of jamming.

A particular problem which occurs in short range radars is that, although the limitation to a short range might be considered as permitting the use of a high PRF (pulse repetition frequency), thereby improving the rate of data input and hence the performance, this performance may be destroyed by long range clutter returns which appear as second and third time round echoes, that is to say clutter returns from ranges greater than the
range corresponding to the pulse repetition period.
Chaff is particularly troublesome since the
velocity spreading on such long range echoes may be
an order greater than the spreading on chaff returns
within the nominal range bracket of the radar. Thus
operation in an MTI mode may not be effective
in eliminating clutter from stationary or slow-
moving targets, such as chaff, at long
ranges.

According to one aspect of the invention, there
is provided bistatic radar apparatus having spaced
directional transmitting and receiving scanning
antennae with directional patterns squinting inwardly
to overlap in a region of interest but to reduce
signals from distant targets. The directional
patterns and squinting are preferably such as to give
a substantial reduction in the overall radar gain
for distant targets, for example, by at least 70 db.
The expression "distant targets" includes not only
ships, aircraft and like moving objects but also chaff
and ground clutter. The present invention is
particularly concerned with a short range radar and, by the above technique, the effect of responses from long range targets is reduced or eliminated.

According to another aspect of the invention, in radar apparatus having a transmitter feeding a transmitting antenna providing a main beam which is directional in a horizontal plane and a receiver fed from a receiving antenna having a main beam which is also directional in a horizontal plane, the transmitting and receiving antennae are spaced apart horizontally with the main beams squinting inwardly to overlap in a region to one side of the line between the two antennae, the beams being so directed that a null on one side of the main beam from one antenna is substantially parallel to a null on the other side of the main beam of the other antenna.

With this arrangement, the transmitting and receiving beams are arranged to intersect in the region of interest. At ranges beyond this region, because the transmitting and receiving beams do not overlap, signals from distant targets are significantly attenuated compared with a conventional radar using coincident transmitting and receiving beams. By making the first zeros of the transmitting and receiving beams (on opposite sides thereof) substantially

-4-

parallel, the returns from all targets at ranges beyond the range of intersection of the maxima of the two beams are necessarily attenuated.

In particular signals from distant chaff is attenuated. It is therefore possible to use a high pulse repetition rate, and thereby improve the wanted signal data rate, without the problems of second and third trace echoes. The maxima range at which overlap of the beams permits detection of targets thus now controls the maximum pulse repetition frequency which can be used. This permits of a higher pulse repetition rate and hence an improved data gathering rate than a conventional radar having coincident transmitting and receiving beams.

It is readily possible to obtain adequate performance to a suitable minimum range by suitably shaping of the transmitting and receiving beams on the sides thereof opposite to the aforementioned nulls. It will be appreciated that, for these very short ranges, signal strength is not a problem and adequate returns can readily be obtained.

Means may be provided for scanning the two beams so that the overlap region where radar coverage is to be obtained is scanned across the sector. Such scanning may be effected mechanically or electrically, for example by using frequency scanning linear arrays for the two antennae. It will be appreciated that the required limitation of maximum range can be obtained only if the scanning is limited to a suitable region to one side of the line between the two antennae but typically coverage of a sector of about $\pm$ 45$^{\circ}$ can readily be obtained by scanning in this way; .all round coverage can be obtained by using further pairs of beams.

Instead of scanning the beams over sectors, it is alternatively possible to use for the transmitter and separately for the receiver, antennae giving multiple beams with the transmitter radiating distinctive signals for example coded signals or signals of a different frequency, on each beam. The number of transmitting and receiving beams need not be the same and it would be possible for example to use a scanning transmitting beam with a multiple pencil receiving beam. The use of multiple beams enables very narrow beams to be employed whilst still obtaining adequate coverage from a minimum range to a required maximum range

Thus, considered more generally, a receiving antenna arranged to provide a plurality of separate receiving beams directed in different angular directions or a

-6-

receiving antenna, or receiving antenna and receiver, arranged to provide a directional beam, the direction of which can be scanned continuously over a sector, may be utilised in conjunction with a transmitting antenna arranged to provide a plurality of beams directed in different angular directions, the transmitter providing distinctive signals on the various beams or with a transmitting antenna, or transmitter and transmitting antenna, arranged to provide a directional beam, the direction of which can be scanned continuously across a sector.

The above-described form of radar apparatus has a maximum range from which signals will be received and hence is of particular advantage in reducing the effects of long-range clutter on a short-range radar. Further advantages will be immediately apparent. If a responsive stand-off jammer at a range beyond the maximum range of overlap of the two beams should lock onto the transmitted frequency, then signals from this jammer will only be received on side lobes of the receiving system and are thus severely attenuated. If the transmitting antenna is used for reception, then the system can be operated as a bistatic radar for passive detection and tracking of self-screening jammers.

In the following description, reference will be made to the accompanying drawings in which:-

Figure 1 is a diagram for explaining the general principles of the invention;

Figures 2A and 2B are graphical diagrams illustrating the beam shapes of two antennae employed in one embodiment of the invention;

Figure 3 is another graphical diagram showing the relationship between the received power and range for a target on the centre line of the coverage area for one embodiment of the invention as compared with a conventional monostatic radar;

Figures 4A, 4B, 4C and 4D are further graphical diagrams showing the relationship between received power and angular direction for a number of different ranges;

Figure 5 is a further diagram illustrating the maximum range for differing angular directions of the beam;

Figure 6 is a diagram illustrating one arrangement of antenna; and

Figure 7 is a diagram for explaining the use of multi-beam antennae in an embodiment of the present invention.

Referring to Figure 1 there are shown diagrammatically a transmitting antenna 10 coupled to a transmitter 11 for radiating short duration pulses of microwave energy. Reflections of these pulses from targets are received at a receiving antennae 12 coupled to a receiver 13. The two antennae are spaced apart a distance S and each provides a directional beam, the transmitting beam being indicated diagrammatically at 15 and the receiving beam at 16. These two beams overlap in the shaded area shown at 17. The beam 15 has a null to one side of it in a direction indicated by the arrow 18. The beam 16 has a null on its other side indicated by the line 19 and these two lines are parallel and normal to the base line between the two antennae in the arrangement illustrated.

Assuming each antenna has a dimension D in the horizontal plane and the radiation has a wavelength $\lambda$ for each antenna, the angle to the first zero is $\frac{\lambda}{D}$.

The transmitting and receiving beams must be inclined to the base line by this angle and hence the base line separation required for a nominal maximum range of $R_o$ is

$$S = \frac{2 R_o \lambda}{D}$$

For example, if $D = 1$ metre, $\lambda = 0.0177$ m, (17 GHz) and $R_o = 12$ km, the base line is 425 metres.

With tapered illumination pencil-beam antennae, the beam width increases (for a given antenna aperture size) and hence the base line has to be increased. For example, with half-cosine illumination (23 dB side-lobes) the angle to the first zero is $3\lambda/2D$ and hence the separation should be increased to

$$S = 3 R_o \frac{\lambda}{D}$$

In general the separation is

$$S \doteq 2R_o . \theta_o$$

where $\theta_o$ is the angle to the first zero.

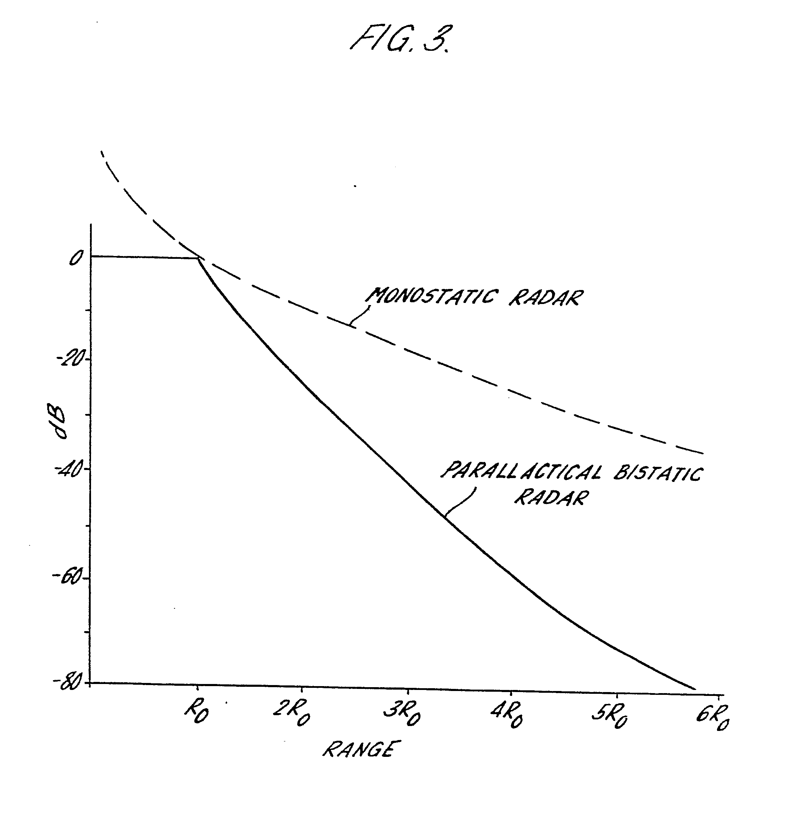

With pencil beam antennae the coverage along the centre line extends from about $R_o/2$ to $3R_o/2$ and some "tails" should be introduced on to one side of each beam in order to provide short-range coverage, as indicated by the dashed lines 20 in Figure 1. Figures 2A and 2B illustrate respectively beam shapes for the two antenna in terms of the angle of inclination $\theta_o$ to the base line. The antenna aperture required to produce this beam shape is about $2 \lambda/\theta_o$. The tail should extend to $\theta_1 = \theta_o \times R_o/R_{min}$ where $R_{min}$ is the minimum range of interest.

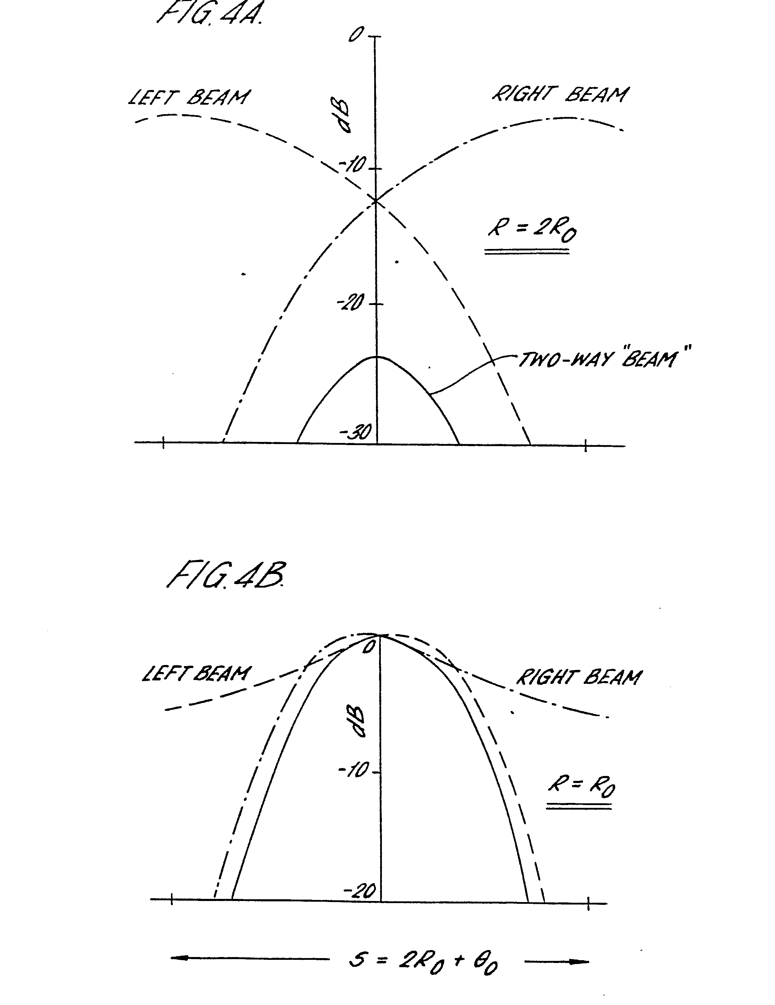

Figure 3 is a graphical diagram showing, by the full line curve, the received power (on a decibel scale relative to a target at range $R_o$) versus range for a target on the centreline using the antennae of Figures 2A and 2B and compares this with the normal $1/R^4$ law applicable to conventional monostatic radars which is shown by a dashed line. The received power is constant up to the range $R_o$ which is the required maximum range and falls off very rapidly beyond this maximum range.

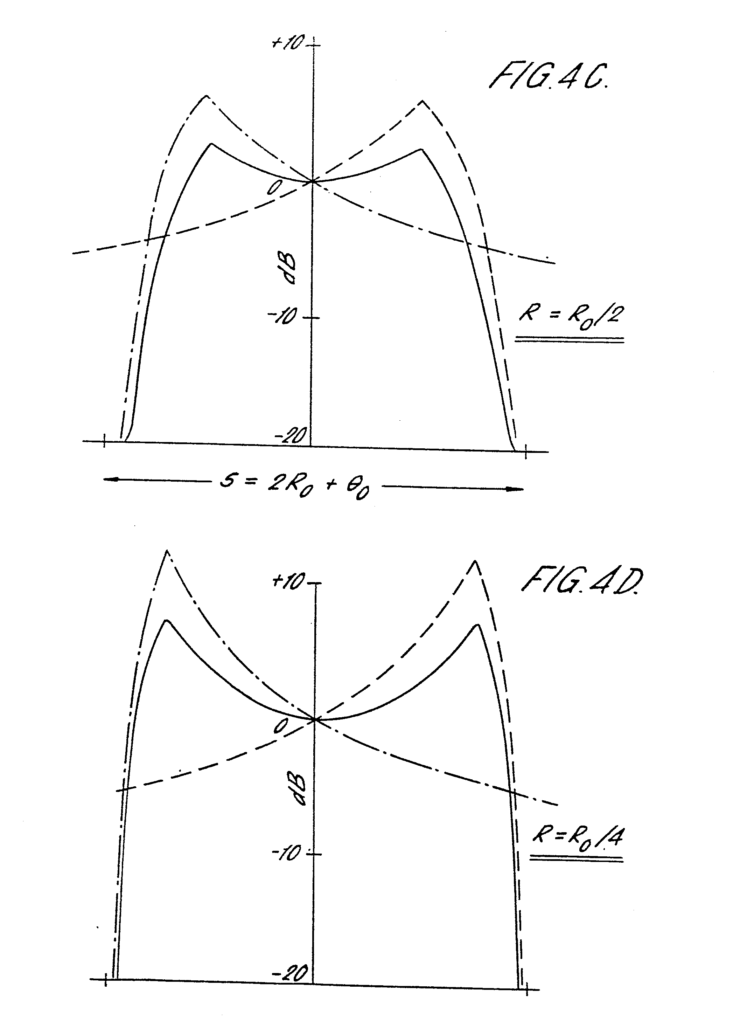

Figures 4A, 4B, 4C and 4D are graphical diagrams showing transverse plots of received power at differing ranges $2R_o$, $R_o$, $\frac{R_o}{2}$ and $\frac{R_o}{4}$ respectively. In each of these diagrams, the dashed line shows the "one-way" power distribution for the left-hand beam, the chain line shows the one-way power distribution for the right-hand beam and the full line shows the combined, i.e. two-way power distribution using one beam for transmission and the other for reception. At $2R_o$ and at $R_o$ the plot is essentially a cosine-squared shape with an equivalent beam width of about S/2. At short ranges, the field is substantially uniform over the central section, but exhibits "ears" close to the edges of the sector. However, the height of the "ears" is comparatively small, e.g. +7 dB at a range of $R_o/4$. (In contrast, a monostatic radar exhibits a 24 dB increase in received power at $R_o/4$.). Thus over a rectangle defined by the base line and the maximum and minimum ranges, the power received from targets or clutter at any range is reasonably uniform. Outside this rectangle, the received power falls off rapidly.

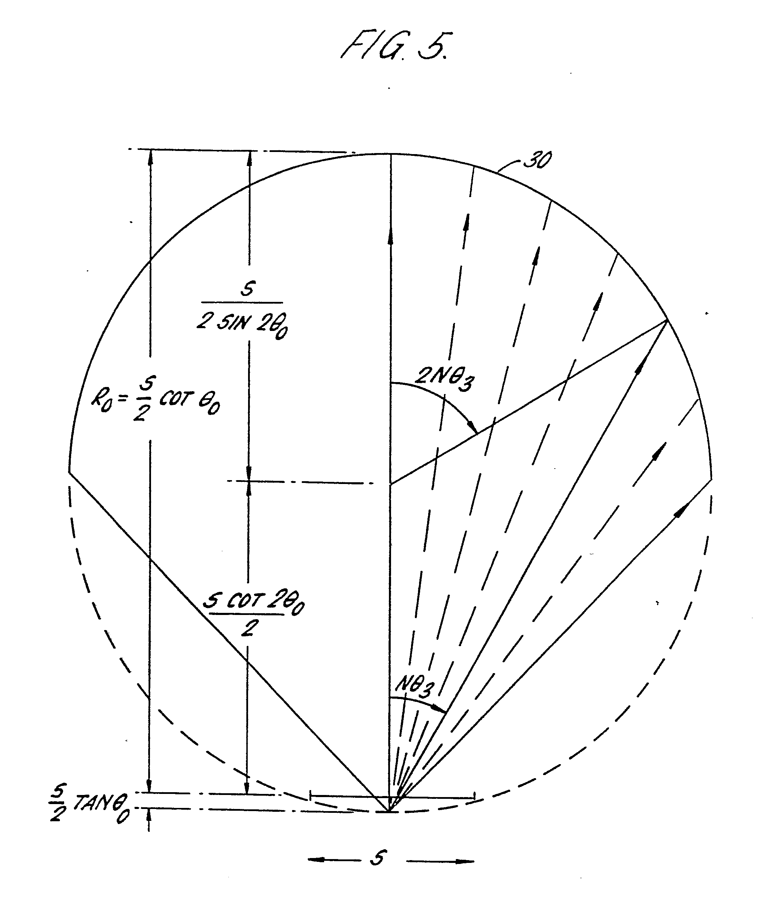

In order to cover a sector, the beams must be scanned mechanically or electronically, or, alternatively, multiple beams must be provided. The basic coverage which can be provided is illustrated in Figure 5. Here $\theta_o$ is the initial inclination angle of each beam to the base line and $\theta_3$ ($\simeq \theta_o$) is the -3 dB beam width. The locus of maximum range shown by the line 30 is a circle of diameter $\frac{S}{2} \csc 2\theta_o$ lying approximately tangential to the base line. The circle passes through the two ends of the base line. The maximum range normal to the base line $R_o$ is $\frac{S}{2} \cot \theta_o$. It will be apparent that when the beams have moved through $90^O$ from this position looking normal to the base line they are diverging, rather than crossing. Thus the angular coverage should be restricted to say $\pm 45^O$: the maximum range at the extremes of this coverage is $R_o/\sqrt{2}$.

-12-

Two conventional radar antennae could be adapted to the bistatic configuration of the present invention by locking their rotations with an offset of $2\theta_o$. This arrangement is not particularly attractive, since it only provides satisfactory cover over one quarter of the complete scan.

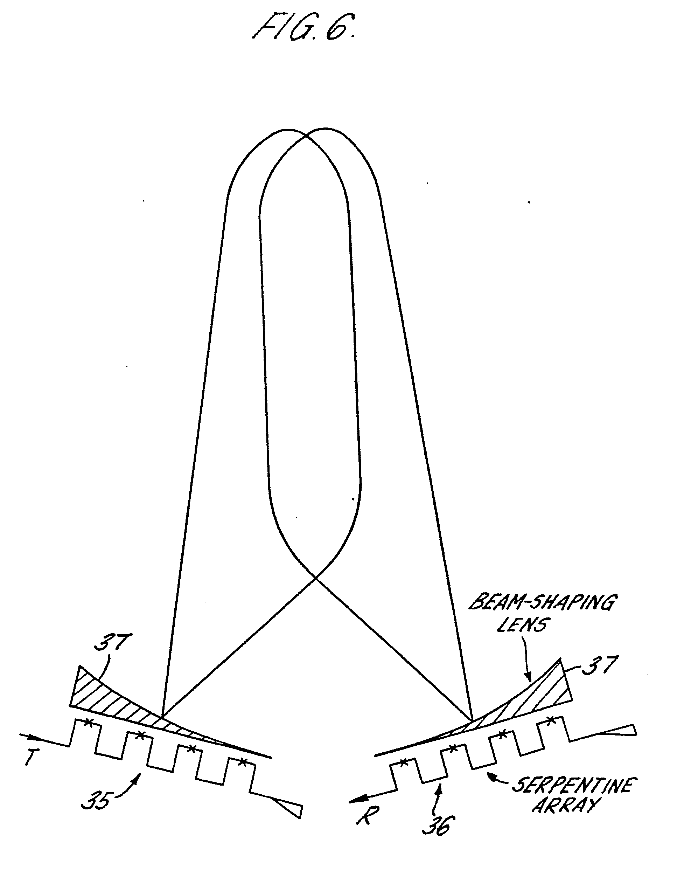

Phase-scanning or frequency scanning linear arrays provide a simple way of effecting the required scanning for a bistatic radar of the present invention. Frequency-scanning appears particularly attractive from economic considerations, since all that is required is two end-fed linear arrays. Such a construction is shown in Figure 6. The arrays 35, 36 are serpentine-fed in order to enhance the squint rate. For example, a "fold-ratio" of about 10/1 at 17 GHz will give a sensitivity of 20 MHz per degree. The beam shaping is performed by an external lens 37 or by a reflector, rather than incorporated in the array design, since both arrays must be fed in the same direction, whereas beam spoiling is required in opposite directions. Four such pairs of antennae are required to provide all-round cover.

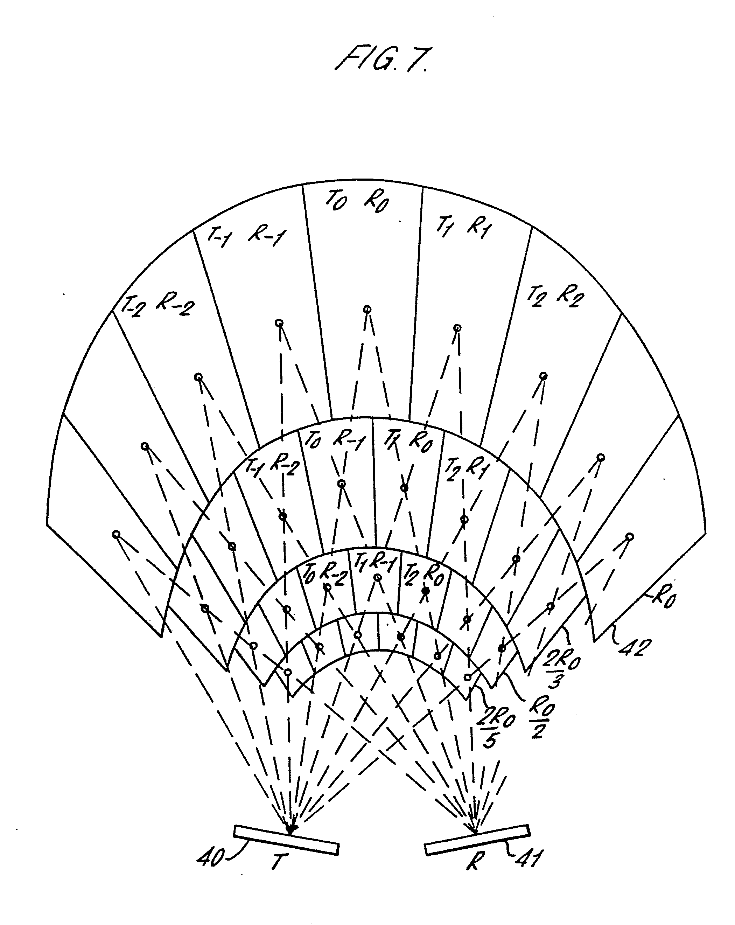

Another very convenient arrangement is to provide multiple pencil beams for both transmission and reception, as illustrated in Figure 7. The antennae are shown at 40, 41. Each transmitted beam would radiate a different code or use a different frequency. The various beams are such that, over the whole of the required coverage region, a target can be detected by the appropriate choice of one transmitting beam and one receiving beam. This coverage region can thus be considered as being divided up into a number of discrete boxes, such as 42, each associated with one transmitting and one receiving beam. Area coverage can be obtained by sequential selection of boxes. In the diagram, some of the transmitting beams are indicated by symbols such as $T_o$, $T_1$ and $T_2$ and receiving beams by symbols $R_o$, $R_1$, $R_2$. The boxes can thus be identified as for example $T_2R_1$. In order to provide short-range cover, each receiver beam must be able to receive a number of transmitted beams (specifically 2N beams where N is the ratio of maximum to minimum range). Alternatively, the beam-forming networks could be arranged to provide shaped T and R beams.

The arrangement of Figure 7 thus provides a radar with area coverage which can locate targets by identifying the approxiate box. Instead of having multiple pencil beams for both transmission and reception, one of the antennae may be a scanning antenna giving a beam which can be scanned continuously across a sector. In particular considerations of economy may lead to a multiple pencil receiving beam associated with a smaller number of scanning transmitter beams.

At the nominal maximum range of the above-described radar apparatus, in clear conditions, the two-way beam pattern is identical to that of a conventional monostatic radar and hence the signal-to-noise ratio is the same. At shorter ranges, the received signal-to-noise does not increase. Thus there is no need to apply swept gain to the receiver. This is particularly advantageous when high PRF's, with many range ambiguities, are employed. However, the same area is covered by successive beams at the shorter ranges and improved detectibility results from longer non-coherent integration times. Since the coverage of any one box of Figure 7 is essentially a rectangle, the angular accuracy degrades at short range. One way round this problem is to provide an additional receiver at the transmitting site, gated by the main receiver, and compare the amplitudes of the two received signals. As is evident from Figures 4C and 4D, there is a substantial difference in amplitude at the two sites for targets off boresight, which becomes more marked as the range reduces.

The above-described bistatic radar apparatus has a much improved performance against clutter compared with a conventional monostatic radar. For ground clutter, both the echoing area and received power are substantially independent of range out to $R_o$. For volumetric clutter such as rain and chaff, the echoing area and received power are reduced as the range reduces due to the elevation beam shape. The signal-to-clutter ratio at $R_0$ for the radar apparatus of the present invention is the same as that of an equivalent monostatic radar and, provided an adequate signal-to-clutter ratio can be achieved at $R_0$, the performance at close ranges should be satisfactory. The bistatic radar is particularly suitable for high PRF systems with many range ambiguities within the working range $R_0$, since clutter "fold-over" does not produce a disastrous reduction in signal-to-clutter ratio. For example, consider a system which uses a PRF of 50 kHz and has a nominal range of 12 km. There are 4 range ambiguities and targets at 12 km range have to compete with clutter at 12, 9, 6 and 3 km. With a conventional monostatic radar, the relative level of power received from ground clutter at these ranges is 0, 3.75, 9 and 18 dB, resulting in a reduction in signal-to-clutter ratio of 18.6 dB. With the bistatic arrangement, all the clutter ranges produce the same received signal level and the reduction is limited to 6 dB, i.e. an improvement of 12.6 dB in signal-to-clutter ratio.

-16-

CLAIMS:

1. Radar apparatus having spaced directional transmitting and receiving scanning antennae characterised in that the antennae have directional patterns squinting inwardly to overlap in a region of interest but to reduce signals from distant targets.

2. Radar apparatus as claimed in claim 1 wherein the directional patterns and squinting are such as to give a substantial reduction in the overall radar gain for distant targets.

3. Radar apparatus having a transmitter feeding a transmitting antenna providing a main beam which is directional in a horizontal plane and a receiver fed from a receiving antenna having a main beam which is also directional in a horizontal plane, characterised in that the transmitting and receiving antennae are spaced apart horizontally with the main beams squinting inwardly to overlap in a region to one side of the line between the two antennae, the beams being so directed that a null on one side of the main beam of one antenna is substantially parallel to a null on the other side of the main beam of the other antenna.

4. Radar apparatus as claimed in claim 3 wherein means are provided for scanning the two beams so that the overlap region where radar coverage is to be obtained is scanned across a sector.

5. Radar apparatus as claimed in claim 4 wherein the scanning is effected mechanically.

6. Radar apparatus as claimed in claim 4 wherein the scanning is effected electrically.

7. Radar apparatus as claimed in claim 6 wherein the two antennae comprise frequency scanning linear rays.

8. Radar apparatus as claimed in any of claims 4 to 7 and having at least one further pair of antennae.

9. Radar apparatus as claimed in claim 3 wherein the transmitting antenna is arranged to provide a plurality of beams directed in different angular directions, and wherein the transmitter is arranged to provide distinctive signals on the various beams.

10. Radar apparatus as claimed in claim 3 wherein the transmitting antenna or the transmitter and transmitting antenna are arranged to provide a directional beam, the direction of which can be scanned continuously across a sector.

11. Radar apparatus as claimed in either claim 9 or claim 10 wherein the receiving antenna is arranged to provide a plurality of separate receiving beams directed in different angular directions.

12. Radar apparatus as claimed in either claim 9 or claim 10 wherein the receiving antenna or the receiver and receiving antenna are arranged to provide a directional beam, the direction of which can be scanned continuously across a sector.

IMR/MM/EA165

FIG. 1.

FIG. 2A.

FIG. 2B.

0015163

FIG. 3.

FIG. 4A.

LEFT BEAM

RIGHT BEAM

$dB$

$0$

$-10$

$R = 2R_0$

$-20$

TWO-WAY "BEAM"

$-30$

FIG. 4B.

LEFT BEAM

RIGHT BEAM

$0$

$dB$

$-10$

$R = R_0$

$-20$

$S = 2R_0 + \theta_0$

0015163

FIG.4C.

$R = R_0/2$

$dB$

$S = 2R_0 + \theta_0$

FIG.4D.

$R = R_0/4$

$dB$

FIG. 5.

7/8

## FIG. 6.

BEAM-SHAPING
LENS

37

37

35

T

R

36

SERPENTINE
ARRAY

FIG. 7.

## DOCUMENTS CONSIDERED TO BE RELEVANT

| Category | Citation of document with indication, where appropriate, of relevant passages | Relevant to claim |
|---|---|---|
| X | US - A - 3 778 823 (SATO)<br><br>+ Fig. 1A, 1B, 1C, 5; column 4, lines 19-47; column 5, lines 28-48 +<br><br>& DE-B2-2 133 239<br>-- | 1-3,9 |
| X | US - A - 4 050 071 (CLORFEINE)<br><br>+ Abstract; fig. 1 +<br>-- | 1,2 |
| X | DE - A - 2 204 647 (SOCIETE DE FABRICATION D'INSTRUMENTS DE MESURE)<br><br>+ Fig. 1,2; claims 1-4 +<br>-- | 1,2 |
| X | US - A - 4 048 637 (JACOMINI)<br><br>+ Fig. 2,4,5; column 5, lines 4-25; column 8, line 13 to column 9, line 45 +<br>-- | 1,2,4, 5 |
|  | US - A - 3 949 396 (CANTRELL)<br><br>+ Fig. 1, 2A; column 2, lines 30-48; column 3, lines 48-56 + | 9-11 |

**CLASSIFICATION OF THE APPLICATION (Int. Cl.)**

G 01 S 13/02
G 01 S 7/36

**TECHNICAL FIELDS SEARCHED (Int.Cl.)**

G 01 S 7/00
G 01 S 13/00
G 08 G 1/00

**CATEGORY OF CITED DOCUMENTS**

X: particularly relevant
A: technological background
   non-written disclosure
   intermediate document
   theory or principle underlying the invention
   earlier patent application
D: document cited in the application
L: citation for other reasons

&: member of the same patent family, corresponding document

| | |
|---|---|
| X | The present search report has been drawn up for all claims |

| Place of search | Date of completion of the search | Examiner |
|---|---|---|
| VIENNA | 09-05-1980 | DRÖSCHER |